# EUROPÄISCHE PATENTSCHRIFT

(11) **EP 0 905 002 B1**
(45) Veröffentlichungstag und Bekanntmachung des Hinweises auf die Patenterteilung: **11.09.2002**
(21) Anmeldenummer: 97122342.5
(22) Anmeldetag: 18.12.1997
(51) Int. Cl.: B61H 5/00, B61C 9/48

(54) **Bremsenanordnung für Schienenfahrzeuge**
Brake assembly for railway vehicles
Dispositif de freinage pour véhicules ferroviaires

(30) Priorität: 26.09.1997 EP 97116784
(43) Veröffentlichungstag der Anmeldung: 31.03.1999
(73) Patentinhaber: SAB WABCO BSI Verkehrstechnik Products GmbH, 42859 Remscheid (DE)
(72) Erfinder: Lehmann, Wolfgang, D-42859 Remscheid (DE); Schwarzenberg, Norbert, D-34130 Kassel (DE)
(74) Vertreter: Richter, Werdermann & Gerbaulet

(56) Entgegenhaltungen:
- EP-A- 0 007 021
- EP-A- 0 542 173
- EP-A- 0 589 865
- DE-A- 4 137 233

## Beschreibung

Die Erfindung betrifft eine Bremsenanordnung für Schienenfahrzeuge mit einer parallel oder in einem Winkel zu einer antreibbaren Radwelle angeordneten Bremswelle, die zumindest eine Bremsscheibe trägt, wobei die Bremswelle einerseits antriebsmäßig mit einem Getriebe verbunden ist, welches einen Getriebeeingang für einen Antriebsmotor und einen Getriebeausgang für die Radwelle aufweist, und andererseits in einem mit dem Antriebsmotor verbundenen Tragarm lösbar gelagert ist.
Bei einer bekannten Bremsenanordnung dieser Gattung (EP 0589865 A1), sind der Antriebsmotor, die Radwelle und die Bremswelle parallelachsig nebeneinander angeordnet. Der Tragarm für die Bremswelle ist mit einer Flanschverbindung lösbar am Antriebsmotor befestigt. Sollen verbrauchte Bremsscheiben ausgewechselt werden, dann muß neben den Bremszangen die Flanschverbindung und gegebenenfalls das Lager im Tragarm gelöst werden, damit die Bremswelle mit den darauf angeordneten Bremsscheiben in axialer Richtung aus dem Getriebe heraus bewegt werden kann. Das Einsetzen einer Bremswelle mit neuen Bremsscheiben erfolgt umgekehrt. Alles ist zeitund kostenaufwendig.

Aufgabe der Erfindung ist es, einen schnellen Austausch der Bremswelle beziehungsweise der Bremsscheiben zu ermöglichen.

Diese Aufgabe wird dadurch gelöst, daß die Bremswelle mehrteilig ausgebildet ist, daß ein die Bremsscheibe oder die Bremsscheiben tragendes Bremswellenmittelteil sowie daran anschließende Bremswellenseitenteile stirnseitig einander zugeordnete Stirnverzahnungen oder ähnliche Zentrierungen aufweisen und daß das Bremswellenmittelteil mit den Bremswellenseitenteilen in axialer Richtung fixierbar ist.

Zum Auswechseln verbrauchter Bremsscheiben genügt es, die axiale Fixierung von Bremswellenmittelteil und Bremswellenseitenteilen zu lösen sowie das tragarmseitige Lager nach Lösen seiner Befestigung am Tragarm zusammen mit dem zugeordneten Bremswellenseitenteil axial soweit zu verschieben, daß die Stirnverzahnungen beziehungsweise entsprechende Zentrierungen zwischen dem Bremswellenmittelteil und den Bremswellenseitenteilen außer Eingriff kommen. Dann kann das Bremswellenmittelteil mit den verbrauchten Bremsscheiben in radialer Richtung weggenommen und durch ein Bremswellenmittelteil mit neuen Bremsscheiben ersetzt werden, ohne daß der Tragarm gelöst werden muß. Vorzugsweise sind die Stirnverzahnungen selbst zentrierend, so daß beim Einsetzen des Bremswellenmittelteils mit neuen Bremsscheiben keine besonderen Maßnahmen erforderlich sind. Dazu können die Stirnverzahnungen eine Keilverzahnung mit Zähnen,aufweisen, die sich radial nach außen keilförmig verbreitern. Andererseits können auch radial bogenförmige oder andere ähnliche Zentrierungen verwendet werden.

Bei einer bevorzugten Ausführung sind die Stirnverzahnungen des Bremswellenmittelteils an auf das Bremswellenmittelteil aufgesetzten Bremsscheibennaben für die Bremsscheiben und die Stirnverzahnungen der Bremswellenseitenteilen an Flanschen der Bremswellenseitenteile angeordnet. Zur axialen Fixierung der Bremswellenteile können Schrauben oder andere Befestigungselemente im Bereich der Flansche beziehungsweise der Bremsscheibennaben vorgesehen sein.

Da nicht ausgeschlossen werden kann, daß während des Betriebes der Tragarm einerseits und das Getriebe andererseits relativ zueinander, wenn auch nur geringe, vertikale Bewegungen zueinander ausführen können, empfiehlt sich eine Ausführung, bei der wenigstens eines der Bremswellenseitenteile in einer drehsteifen Ausgleichskupplung (z.B. Zahnkupplung) gelagert ist, so daß die Bremswelle derartigen Relativbewegungen folgen kann. Zusätzlich sollte zumindest die Bremswelle eine gewisse Winkelbeweglichkeit sowie eine axiale Beweglichkeit besitzen.

Weil bei der erfindungsgemäßen Bremsenanordnung der Tragarm beim Austausch der Bremswellen nicht mehr gelöst und nicht mehr bewegt zu werden braucht, besteht auch die Möglichkeit, eine Bremstraverse mit gegen die Bremsscheiben wirkenden Bremseinrichtungen lösbar einerseits am Tragarm und andererseits an einem das Getriebe aufnehmenden Getriebekasten zu befestigen. Damit kann auch die Bremstraverse auf einfache Weise ausgetauscht werden, gegebenenfalls auch die eine Bremstraverse mit einem anderen Bremssystem.

Im übrigen besteht die Möglichkeit, die Bremstraverse und/oder den Tragarm als Träger für Versorgungsleitungen und/oder Belüftungsleitungen, oder auch Sensorelementen auszubilden.
Darüberhinaus kann die Bremstraverse auch andere Betätigungseinrichtungen, wie z.B. rotierende Teile von Bremsgeneratoren oder hydraulische Bremsbetätigungen tragen.
Mit Hilfe der Bremstraverse und des Tragarmes ist auch eine Dreipunktaufhängung der Antriebseinheit im Drehgestell möglich.

Im folgenden wird ein in der Zeichnung dargestelltes Ausführungsbeispiel der Erfindung erläutert;
Es zeigen:

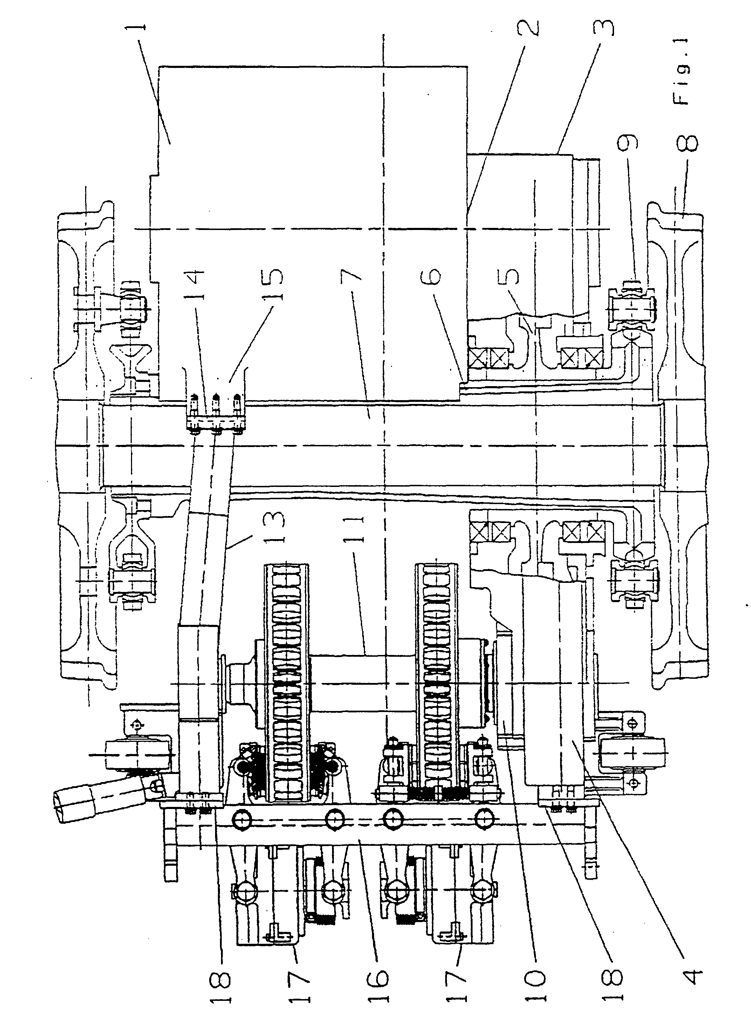

- Figur 1: schematisch und teilweise eine Draufsicht auf eine Bremsenanordnung für Schienenfahrzeuge,
- Figur 2: schematisch und teilweise geschnitten eine Bremswelle mit Bremsscheiben.

Ein Antriebsmotor 1 ist an einen Getriebeeingang 2 eines in einem Getriebekasten 3 untergebrachten Getriebes 4 angeschlossen und treibt eine an einen Getriebeausgang 5 angeschlossene Radwelle 6, die bei der dargestellten Ausführung eine Hohlwelle ist. Die mit dem Antriebsmotor 1 parallelachsig angeordnete Radwelle 6 umgibt eine Radachse 7 mit beidseits daran angeordneten Rädern 8, die über Kupplungseinrichtungen 9 von der Radwelle 6 mitgenommen werden.

Das Getriebe 4 besitzt einen weiteren Getriebeausgang 10 für eine Bremswelle 11 mit zwei darauf angeordneten Bremsscheiben 12. Das andere Ende der Bremswelle 11 ist in einem Tragarm 13 gelagert, der mit einer Flanschverbindung 14 an einem Vorsprung 15 des Antriebsmotors 1 befestigt ist.

Eine Bremstraverse 16 mit darauf angeordneten Bremseinrichtungen 17 ohne zugeordneten Antrieben ist einerseits am freien Ende des Tragarms 13 sowie andererseits am freien Ende des Getriebekastens 3 mit Flanschverbindungen 18 befestigt. Nach Lösung der Flanschverbindungen 18 kann die Bremstraverse 16 ausgetauscht und gegebenenfalls auch durch eine Bremstraverse mit einem anderen Bremssystem ersetzt werden. Nicht dargestellt ist, daß der Tragarm 13 und/oder die Bremstraverse 16 als Träger für Versorgungsleitungen, Belüftungsleitungen, Sensorelementen oder auch Bremseinrichtungen wie z.B. rotierenden Teilen von Bremsregeneratoren oder hydraulischen Bremsbetätigungen ausgebildet sein können.

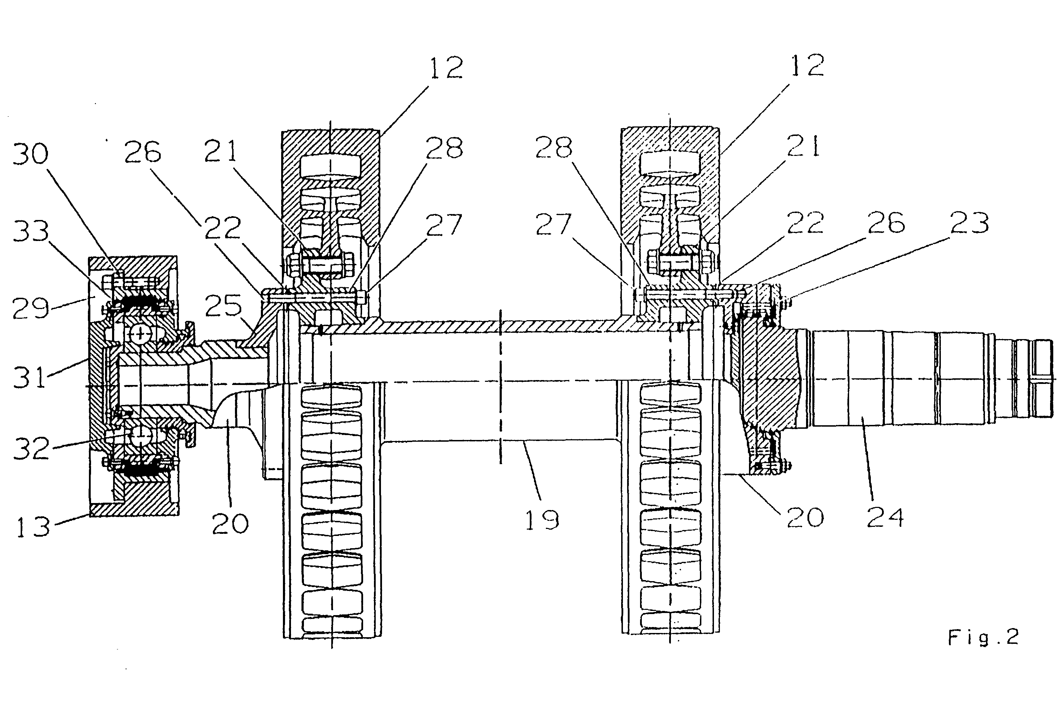

Aus Figur 2 entnimmt man, daß die Bremswelle 11 mehrteilig ausgebildet ist. Sie besteht aus einem Bremswellenmittelteil 19 und zwei beidseits daran angeordneten Bremswellenseitenteilen 20.

Auf die Enden des Bremswellenmittelteils 19 sind Bremsscheibennaben 21 aufgesetzt, an denen in üblicher Weise die Bremsscheiben 12 befestigt sind.

Die Bremsscheibennaben 21 weisen an ihren außeren Stirnseiten jeweils eine selbstzentrierende Stirnverzahnung 22 auf, die zum Beispiel aus einer Keilverzahnung mit Zähnen bestehen kann, die sich radial nach außen keilförmig verbreitern.

Das in Figur 2 rechte Bremsscheibenseitenteil 20 ist über eine Zahnkupplung 23 mit einem Antriebszapfen 24 verbunden, der seinerseits an den Getriebeausgang 10 angeschlossen ist. Dieses Bremswellenseitenteil 20 weist auf seiner dem Bremswellenmittelteil 19 zugewandten Stirnseite ebenfalls eine Stirnverzahnung 22 auf, die der Stirnverzahnung 22 des Bremswellenmittelteils 19 zugeordnet ist und mit dieser zusammenwirkt.

Das in Figur 2 auf der linken Seite angeordnete Bremswellenseitenteil weist einen Flansch 25 auf, der ebenfalls eine Stirnverzahnung 22 trägt, die der gegenüberliegenden Stirnverzahnung 22 des Bremswellenmittelteils 19 zugeordnet ist und mit dieser zusammenwirkt.

Der Flansch 25 sowie das rechte Bremswellenseitenteil 20 besitzen axiale Gewindebohrungen 26 für Schrauben 27, die sich durch Durchgangsbohrungen 28 der Bremsnaben 21 erstrecken und mit denen die Bremswellenseitenteile 20 mit dem Bremswellenmittelteil 19 verbindbar und in axialer Richtung fixierbar sind.

Das in Figur 2 linke Bremswellenseitenteil 20 trägt eine Lageranordnung 29, die mit einer Flanschverbindung 30 von außen in einer zugeordneten Öffnung 31 des Trägers 13 befestigbar ist. Die Lageranordnung 29 besteht bei der dargestellten Ausführung aus einem auf dem Bremswellenseitenteil 20 angeordneten Kugellager 32. Für Dämpfung und erhöhte Winkelbeweglichkeit des Lagers ist z.B. ein Elastomerlager 33 zwischen dem Kugellager 32 und dem Tragarm 13 angeordnet. Es ist auch denkbar, daß sich das Elastomerlager 33 z.B. als sphärisches Gelenklager ausbilden läßt.

Zum schnellen Austausch der Bremsscheiben 12 werden zunächst die Schrauben 27 gelöst und damit die axiale Fixierung des Bremswellenmittelteils, 19 mit den beiden Bremswellenseitenteilen 20 aufgehoben. Dann wird die Flanschverbindung 30 der Lageranordnung 29 vom Träger 13 gelöst und die Lageranordnung 29 axial so weit verschoben, bis die Stirnverzahnungen 22 frei sind. Danach kann das Bremswellenmittelteil 19 mit den Bremsscheiben 12 in radialer Richtung entfernt werden. Wird ein neues Bremswellenmittelteil 19 mit neuen Bremsscheiben 12 eingesetzt, dann zentriert es sich wegen der oben beschriebenen Ausbildung der Stirnverzahnungen 21 selbsttätig relativ zu den Bremswellenseitenteilen 20. Die Flanschverbindung 31 der Lageranordnung 29 wird wieder angezogen und die Schrauben 27 werden zur Fixierung des Bremswellenmittelteils 19 an den Bremswellenteilen 20 in ihr zugeordnete Gewindebohrungen 26 eingedreht.

### Bezugszeichenliste

- 1: Antriebsmotor
- 2: Getriebeeingang
- 3: Getriebekasten
- 4: Getriebe
- 5: Getriebeausgang für 6
- 6: Radwelle
- 7: Radachse
- 8: Räder
- 9: Kupplungseinrichtung
- 10: Getriebeausgang für 11
- 11: Bremswelle
- 12: Bremsscheiben
- 13: Tragarm
- 14: Flanschverbindung
- 15: Vorsprung
- 16: Bremstraverse
- 17: Bremseinrichtungen
- 18: Flanschverbindungen
- 19: Bremswellenmittelteil
- 20: Bremswellenseitenteile
- 21: Bremsscheibennabe
- 22: Stirnverzahnung
- 23: drehsteife Ausgleichskupplung, Zahnkupplung
- 24: Antriebszapfen
- 25: Flansch
- 26: Gewindebohrungen
- 27: Schrauben
- 28: Durchgangsbohrung
- 29: Lageranordnung
- 30: Flanschverbindung
- 31: Öffnung
- 32: Kugellager
- 33: Elastomerlager

## Patentansprüche

1. Bremsenanordnung für Schienenfahrzeuge mit einer parallel oder in einem Winkel zu einer antreibbaren Radwelle (6) angeordneten Bremswelle (11), die zumindest eine Bremsscheibe (12) trägt, wobei die Bremswelle (11) einerseits antriebsmäßig mit einem Getriebe (4) versehen ist, welches einen Getriebeeingang (2) für einen Antriebsmotor (1) und einen Getriebeausgang (5) für die Radwelle (6) aufweist, und andererseits in einem mit dem Antriebsmotor (1) verbundenen Tragarm (13) lösbar gelagert ist, **dadurch gekennzeichnet, daß** die Bremswelle (11) mehrteilig ausgebildet ist, daß ein die Bremsscheibe (12) oder die Bremsscheiben (12) tragendes Bremswellenmittelteil (19) sowie daran anschließende Bremswellenseitenteile (20) stirnseitig einander zugeordnete Stirnverzahnungen (22) oder ähnliche Zentrierungen aufweisen und daß das Bremswellenmittelteil (19) mit den Bremswellenseitenteilen (20) in axialer Richtung fixierbar ist.

2. Bremsenanordnung nach Anspruch 1, **dadurch gekennzeichnet, daß** das tragarmseitige Lager (29) nach Lösen seiner Befestigung am Tragarm (13) zusammen mit dem zugeordneten Bremswellenseitenteil (20) axial verschiebbar ist.

3. Bremsenanordnung nach Anspruch 1 oder 2, **dadurch gekennzeichnet, daß** die Stirnverzahnungen (22) selbstzentrierend sind.

4. Bremsenanordnung nach einem der Ansprüche 1 bis 3, **dadurch gekennzeichnet, daß** die Stirnverzahnungen (22) eine Keilverzahnung mit Zähnen, die sich radial nach außen keilförmig verbreitern, aufweisen.

5. Bremsenanordnung nach einem der Ansprüche 1 bis 4, **dadurch gekennzeichnet, daß** die Stirnverzahnungen (22) des Bremswellenmittelteils (19) an auf das Bremswellenmittelteil (19) aufgesetzten Bremsscheibennaben (21) für die Bremsscheibe (12) und die Stirnverzahnungen (22) der Bremswellenseitenteile (20) an Flanschen (25) der Bremswellenseitenteile (20) angeordnet sind.

6. Bremsenanordnung nach einem der Ansprüche 1 bis 5, **dadurch gekennzeichnet, daß** zur axialen Fixierung der Bremswellenteile Schrauben (27) und/oder Paßfedern im Bereich der Flansche (25) beziehungsweise der Bremsscheibennaben (21) vorgesehen sind.

7. Bremsenanordnung nach einem der Ansprüche 1 bis 6, **dadurch gekennzeichnet, daß** wenigstens eines der Bremswellenseitenteile (20) in einer drehsteifen Ausgleichskupplung (23) gelagert ist.

8. Bremsenanordnung nach einem der Ansprüche 1 bis 7, **dadurch gekennzeichnet, daß** zumindest die Bremswelle (11) eine Winkelbeweglichkeit und/oder eine axiale Beweglichkeit besitzt.

9. Bremsenanordnung nach einem Ansprüche 1 bis 8, **dadurch gekennzeichnet, daß** eine Bremstraverse (16) mit gegen die Bremsscheiben (12) spannbaren Bremseinrichtungen (17) lösbar einerseits am Tragarm (13) und andererseits an einem das Getriebe (4) aufnehmenden Getriebekasten (3) befestigt ist.

10. Bremsenanordnung nach einem der Ansprüche 1 bis 9, **dadurch gekennzeichnet, daß** die Bremstraverse (16) und/oder der Tragarm (13) als Träger für Versorgungsleitungen und/oder Belüftungsleitungen oder auch Sensorelementen ausgebildet sind.

## Claims

1. Brake arrangement for rail vehicles with a brake shaft (11) placed parallel or at an angle to a drivable wheel shaft (6) which carries at least one brake disk (12), whereby the brake shaft (11) is provided on one side for the drive with a gear (4) which shows a gear inlet (2) for a driving motor (1) and a gear outlet (5) for the wheel shaft (6) and which is removably arranged on the other side in a carrying arm (13) connected with the driving motor (1), **characterized in that** the brake shaft (11) is constituted by several parts, that a brake shaft medial part (19) which carries the brake disk (12) or the brake disks (12) as well as joining brake shaft side parts (20) show on the front side front indentations (22) associated to each other or similar centering devices and that the brake shaft medial part (19) with the brake shaft side parts (20) can be fixed in axial direction.

2. A brake arrangement according to claim 1, **characterized in that** the bearing (29) on the carrying arm side can be moved axially together with the associated brake shaft side part (20) after having loosened its fixation on the carrying arm (13).

3. A brake arrangement according to claim 1 or 2, **characterized in that** the front indentations (2) are self-centering.

4. A brake arrangement according to any of the claims 1 to 3, **characterized in that** the front indentations (22) have a wedge indentation with teeth which widen wedge-shaped radially outwards.

5. A brake arrangement according to any of the claims 1 to 4, **characterized in that** the front indentations (22) of the brake shaft medial part (19) are placed on brake disk hubs (21) placed on the brake shaft medial part (19) and the front indentations (22) of the brake shaft side parts (20) are placed on flanges (25) of the brake shaft side parts (20).

6. A brake arrangement according to any of the claims 1 to 5, **characterized in that** screws (27) and/or feather keys are provided in the area of the flanges (25) or of the brake disk hubs (21) for the axial fixing of the brake shaft parts.

7. A brake arrangement according to any of the claims 1 to 6, **characterized in that** at least one of the brake shaft side parts (20) is positioned in a compensating coupling stiff against torsion (23).

8. A brake arrangement according to any of the claims 1 to 7, **characterized in that** at least the brake shaft (22) possesses an angular movability and/or an axial movability.

9. A brake arrangement according to any of the claims 1 to 8, **characterized in that** a brake tie-bar (16) with brake devices (17) tensible against the brake disks (12) is removably fixed on the one hand to the carrying arm (13) and on the other hand to a gear casing (3) which receives the gear (4).

10. A brake arrangement according to any of the claims 1 to 9, **characterized in that** the brake tie-bar (16) and/or the carrying arm (13) are configured as supports for supply lines and/or aeration lines or even sensor elements.

## Revendications

1. Dispositif de freinage pour véhicules sur rails avec un arbre de frein (11), placé parallèlement ou dans un angle par rapport à un arbre de roue (6) qui peut être entraîné, qui porte au moins un disque de frein (12), l'arbre de frein (11) étant pourvu d'un côté pour l'entraînement d'un engrenage (4) qui présente une entrée d'engrenage (2) pour un moteur de commande (1) et une sortie d'engrenage (5) pour l'arbre de roue (6) et étant positionné d'autre part de manière détachable dans un arbre porteur (13) relié au moteur de commande (1), **caractérisé en ce que** l'arbre de frein (11) est configuré en plusieurs parties, qu'une partie médiane d'arbre de frein (19) qui porte le disque de frein (12) ou les disques de frein (12) ainsi que des parties latérales d'arbre de frein adjacentes (20) présentent, sur le côté de la face, des dentures frontales associées l'une à l'autre ou des centrages similaires et que la partie médiane d'arbre de frein (19) avec les parties latérales d'arbre de frein (20) peut être fixée dans le sens axial.

2. Dispositif de freinage selon la revendication 1, **caractérisé en ce que** le palier du côté du bras porteur (29) peut être déplacé axialement ensemble avec la partie latérale d'arbre de frein associée (20) après avoir desserré sa fixation sur le bras porteur (13).

3. Dispositif de freinage selon la revendication 1 ou 2, **caractérisé en ce que** les dentures frontales (22) sont à centrage automatique.

4. Dispositif de freinage selon l'une des revendications 1 à 3, **caractérisé en ce que** les dentures frontales (22) présentent une denture de coin avec des dents qui s'élargissent radialement vers l'extérieur en forme de clavette.

5. Dispositif de freinage selon l'une des revendications 1 à 4, **caractérisé en ce que** les dentures frontales (22) de la partie médiane d'arbre de frein (19) sont placées sur des moyeux de disque de frein placés sur la partie médiane d'arbre de frein (19) et les dentures frontales (22) des parties latérales d'arbre de frein (20) sont placées sur des brides (25) des parties latérales d'arbre de frein (20).

6. Dispositif de freinage selon l'une des revendications 1 à 5, **caractérisé en ce que** des vis (27) et/ou des ressorts d'ajustage sont prévus dans la zone des brides (25) ou des moyeux de disque de frein (21) pour la fixation axiale des parties d'arbre de frein.

7. Dispositif de freinage selon l'une des revendications 1 à 6, **caractérisé en ce qu'**au moins l'une des parties latérales d'arbre de frein (20) est logée dans un accouplement compensateur (23) rigide à la torsion.

8. Dispositif de freinage selon l'une des revendications 1 à 7, **caractérisé en ce qu'**au moins l'arbre de frein (11) possède une mobilité angulaire et/ou une mobilité axiale.

9. Dispositif de freinage selon l'une des revendications 1 à 8, **caractérisé en ce qu'**une traverse de frein (16) avec des dispositifs de frein (17) qui peuvent être tendus contre les disques de frein (12) est fixée de manière détachable d'une part au bras porteur (13) et d'autre part à une boîte d'engrenages (3) qui loge l'engrenage (4).

10. Dispositif de freinage selon l'une des revendications 1 à 9, **caractérisé en ce que** la traverse de frein (16) et/ou le bras porteur (13) sont configurés comme des supports pour des conduites d'alimentation et/ou des conduites d'aération ou même des éléments de capteur.
